# FASCICULE DE BREVET EUROPEEN

(11) **EP 1 150 848 B1**
(45) Date de publication et mention de la délivrance du brevet: **09.04.2003**
(21) Numéro de dépôt: 00900660.2
(22) Date de dépôt: 25.01.2000
(51) Int. Cl.: B60B 27/00, B60B 27/02, B62L 1/00, B60B 27/04

(54) **MOYEU POUR MOTOCYCLE OU ANALOGUE PERMETTANT DE RENDRE REVERSIBLE LA ROUE DANS SON SUPPORT**
NABE FÜR MOTORRAD ODER DERGLEICHEN UM DAS RAD IN SEINER STÜTZE UMKEHRBAR ZU MACHEN
HUB FOR MOTORCYCLE OR THE LIKE FOR MAKING THE WHEEL REVERSIBLE IN ITS SUPPORT

(30) Priorité: 25.01.1999 FR 9900771
(43) Date de publication de la demande: 07.11.2001
(73) Titulaire: Pidoux, Laurent, 25400 Exincourt (FR)
(72) Inventeur: Pidoux, Laurent, 25400 Exincourt (FR)
(74) Mandataire: Puiroux, Guy
(86) Numéro de dépôt international: FR0000162
(87) Numéro de publication internationale: WO00043222

(56) Documents cités:
- EP-A- 0 014 101
- FR-A- 2 752 773
- US-A- 4 343 380
- PATENT ABSTRACTS OF JAPAN vol. 011, no. 082 (M-571), 12 mars 1987 (1987-03-12) & JP 61 236935 A (HONDA MOTOR CO LTD), 22 octobre 1986 (1986-10-22)
- PATENT ABSTRACTS OF JAPAN vol. 012, no. 495 (M-780), 23 décembre 1988 (1988-12-23) & JP 63 215401 A (YAMAHA MOTOR CO LTD), 7 septembre 1988 (1988-09-07)
- PATENT ABSTRACTS OF JAPAN vol. 017, no. 664 (M-1523), 8 décembre 1993 (1993-12-08) & JP 05 221202 A (SUZUKI MOTOR CORP), 31 août 1993 (1993-08-31)

## Description

La présente invention concerne un moyeu de roue arrière d'un engin de locomotion à deux roues tel que motocycle, cyclomoteur, cycle, permettant de rendre réversible la roue dans son support.

Les personnes pratiquant la motocyclette retournent régulièrement les pneus de leur roue arrière pour rendre leur engin plus performant ou par économie à cause de la détérioration du bord d'attaque de la sculpture de leur pneu dans le sens de la traction. On a en effet constaté qu'un pneu arrière s'use toujours beaucoup plus vite dans le sens de la traction que dans le sens du freinage. Lorsqu'une usure importante du pneu est constatée, l'utilisateur de la motocyclette le retourne pour le rendre plus accrocheur à la traction puisqu'il va travailler alors dans le sens inverse de son usure précédente. Or, comme le moyeu d'une roue arrière comporte une couronne dentée de transmission du mouvement de rotation fixée sur un côté du moyeu et un disque de frein fixé sur l'autre côté du moyeu, la roue arrière doit être montée toujours dans la même position, c'est-à-dire avec la couronne dentée de son moyeu située du côté de la motocyclette où se trouve la chaîne de transmission. Par conséquent, lorsque l'utilisateur doit retourner le pneu arrière, il est obligé, après avoir démonté la roue arrière, de démonter le pneu de sa jante, le retourner, le remettre en place dans sa nouvelle position sur la jante et remonter finalement la roue. Toutes ces opérations prennent à l'évidence un temps relativement long.

A cet égard, on a déjà proposé une solution dans le brevet JP 05 221202 A qui divulgue toutes les caractéristiques du préambule de la revendication 1, en tournant la roue arrière sur elle-même suivant son axe de symétrie verticale, tout en laissant en place la couronne dentée par la transmission du mouvement du côté de la chaîne moteur et le disque de frein de l'autre côté ; pour cela, il est prévu selon ce document antérieur de démonter les deux pièces préalablement au retournement de la roue sur elle-même, en enlevant les boulons de fixation les solidarisant au noyau central de la roue et, naturellement, on procède à l'inverse pour le remontage de la roue.

Ces opération de montage/démontage des pièces sur le noyau restent longues, fastidieuses et n'apportent qu'un gain très relatif sur les temps d'inversion de roue, notamment en compétition.

La présente invention vise à remédier à cet inconvénient en procurant une roue arrière ayant un moyeu de conception simple et réversible permettant de retourner le pneu arrière sans avoir à le dégager de la jante de la roue.

A cet effet, cette roue arrière d'un engin de locomotion à deux roues, comportant un moyeu constitué d'un noyau, une couronne dentée de transmission du mouvement de rotation et un disque de frein, les trois parties accolées les unes aux autres par des moyens les rendant solidaires en rotation, l'ensemble des trois parties comportant des moyens lui permettant dans l'une et l'autre de ses deux positions de montage possibles opposées de 180° l'une par rapport à l'autre, de présenter une couronne dentée du côté où se trouve la chaîne de transmission et un disque de frein du côté où se trouve le frein à disque est remarquable en ce que l'ensemble en trois parties est aisément démontable par l'écrou de roue.

Suivant une forme d'exécution de la présente invention, le moyeu comporte trois parties accolées les unes aux autres, à savoir un noyau central symétrique par rapport à un plan transversal médian, comprenant sur chacune de ses deux faces frontales, un même nombre d'éléments d'accouplement par emboîtement, mâles ou femelles, répartis de la même façon autour de l'axe du moyeu, et des flasques rapportées respectivement sur les deux faces frontales du noyau, portant, l'un, le disque de frein et, l'autre, la couronne dentée de transmission, chacun de ces flasques comportant, sur sa face tournée vers la face frontale associée du noyau, des éléments d'accouplement complémentaires, femelles ou mâles, coopérant avec les éléments d'accouplement du noyau pour rendre solidaires en rotation le noyau encadré des deux flasques.

On décrira ci-après, à titre d'exemple non limitatif, une forme d'exécution préférée de la présente invention en référence aux dessins annexés sur lesquels :
- la figure 1 est une vue en coupe axiale, éclatée, d'un moyeu de roue arrière suivant l'invention,
- la figure 2 est une vue en élévation d'une face frontale du noyau central du moyeu représenté sur la figure 1,

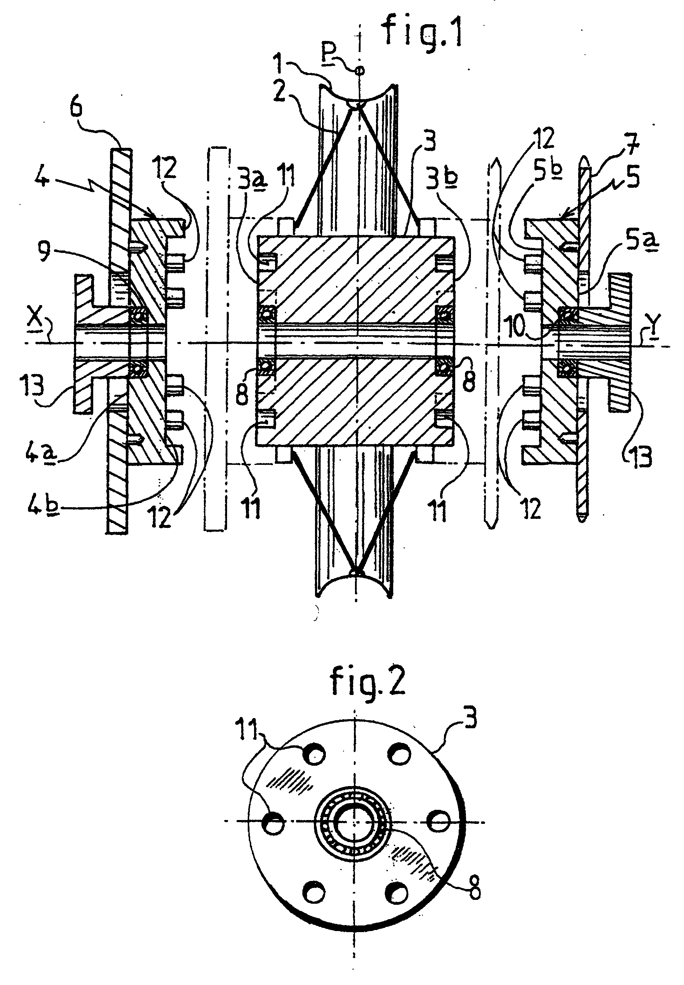

Sur la figure 1 est représentée schématiquement une roue arrière d'un engin de locomotion à deux roues, tel qu'une motocyclette, cette roue comportant une jante périphérique 1 reliée par des rayons 2 au moyeu de la roue. Ce moyeu est composé, dans cette forme d'exécution non limitative, de trois parties, à savoir un noyau central cylindrique 3, symétrique par rapport au plan transversal médian P de la roue, et deux flasques latéraux 4 et 5 rapportés sur les faces frontales gauche 3a et droite 3b du noyau 3. Le flasque gauche 4 constitue un support pour un disque de frein annulaire 6 qui est fixé, par tous moyens appropriés, sur la face externe 4a du flasque 4. Le flasque droit 5 forme un support pour une couronne dentée de transmission 7 sur laquelle passe une chaîne non représentée. Cette couronne dentée 7 est fixée sur la face externe 5a du flasque 5, par tous moyens appropriés.

Le noyau central 3 et les flasques 4 et 5 sont respectivement montés à rotation, par l'intermédiaire de roulements 8,9,10, autour de l'axe x,y de la roue arrière.

Lorsque le moyeu est assemblé, les flasques 4 et 5 sont accolés respectivement aux faces frontales gauche 3a et droite 3b, du noyau 3, dans les positions indiquées schématiquement en traits mixtes sur la figure 1. Dans ces positions, les flasques latéraux 4 et 5 sont rendus solidaires en rotation du noyau central 3 par l'emboîtement d'éléments d'accouplement mâles et femelles complémentaires prévus sur les faces frontales 3a,3b du noyau central 3 et sur les faces internes respectives 4b,5b, c'est-à-dire celles qui sont tournées vers le noyau central 3, des flasques 4 et 5. Les éléments d'accouplement sont constitués par des saillies prévues sur l'une des faces en regard et des creux complémentaires prévus dans l'autre face en regard, répartis sur des cercles de même diamètre.

Dans la forme d'exécution non limitative représentée sur les figures 1 et 2, chaque face frontale 3a,3b du noyau central 3 présente des creux 11 répartis régulièrement autour de l'axe x,y du noyau central 3. Ces creux peuvent être au nombre de six comme il est représenté sur la figure 2 en étant répartis à 60° les uns des autres. Par ailleurs, chacun des flasques latéraux 4,5 présente, sur sa face interne respective 4b,5b, des bossages ou tétons 12 répartis régulièrement autour de l'axe x,y du moyeu et disposés en regard des creux 11, vu dans le sens axial. Le flasque droit 5 qui est solidaire de la couronne dentée de transmission 7 et qui est soumis à l'effort de traction, comporte un nombre de tétons 12 égal à celui des creux 11 alors que le flasque gauche 4 qui porte le disque de frein 6 et qui est soumis à un effort moindre, peut comporter un nombre inférieur de tétons 12, par exemple seulement trois tétons régulièrement répartis à 120° les uns par rapport aux autres.

Le moyeu suivant l'invention comprend en outre, à l'extérieur de chacun des flasques latéraux 4,5, une entretoise 13 de largeur variable en fonction du type d'engin sur lequel le moyeu est monté, pour tenir compte des différentes largeurs des fourches arrières.

Le moyeu qui vient d'être décrit facilite considérablement le retournement du pneu de la roue arrière. En effet, après avoir défait l'écrou de roue, on tire l'axe à l'extérieur du moyeu pour libérer la roue et une fois celle-ci dégagée de la fourche, on démonte les deux flasques 4,5 qui sont emboîtés dans les faces frontales du noyau central 3 et on les remonte en inversant leurs positions. Autrement dit, on installe le flasque 4 portant le disque de frein 6 à droite, en emboîtant ses tétons 12 dans les creux 11 de la face frontale 3b du noyau central 3 et on installe l'autre flasque 5 du côté gauche, en emboîtant ses tétons 12 dans les creux 11 de la face frontale 3a du noyau 3. On remonte ensuite la roue avec les flasques 4,5 dans leurs positions inversées et de ce fait la roue est entraînée ensuite à rotation en sens inverse de son sens précédent et son pneu devient alors plus accrocheur à la traction puisqu'il travaille dans le sens inverse de son usure précédente.

## Revendications

1. Roue arrière d'un engin de locomotion à deux roues, comportant un moyeu constitué d'un noyau (3), une couronne dentée (7) de transmission du mouvement de rotation et un disque de frein (6), les trois parties accolées les unes aux autres par des moyens les rendant solidaires en rotation, l'ensemble des trois parties (3,6,7) comportant des moyens lui permettant dans l'une et l'autre de ses deux positions de montage possible opposées de 180° l'une par rapport à l'autre, de présenter une couronne dentée (7) du côté où se trouve la chaîne de transmission et un disque de frein (6) du côté où se trouve le frein à disque **caractérisée en ce que** l'ensemble en trois partie est aisément démontable par l'écrou de roue.

2. Roue arrière suivant la revendication 1 **caractérisée en ce que** le noyau central (3), symétrique par rapport à un plan transversal médian (P), comprend sur chacune de ses deux faces frontales (3a,3b), un même nombre d'éléments d'emboîtement (11), mâles ou femelles, répartis de la même façon autour de l'axe (x,y) du moyeu, et deux flasques (4,5) rapportées respectivement sur les deux faces frontales (3a,3b) du noyau (3), portant, l'un, le disque de frein (6) et, l'autre, la couronne dentée de transmission (7), chacun de ces flasques (4,5) comportant, sur sa face (4b,5b) tournée vers la face frontale associée (3a,3b) du noyau (3), des éléments complémentaires (12), femelles ou mâles, coopérant avec les éléments d'emboîtement (11) du noyau (3) pour rendre solidaires en rotation le noyau encadré des deux flasques (4,5).

3. Roue selon la revendication 2 **caractérisée en ce qu'**une entretoise (13) de largeur variable en fonction du type d'engin est montée à l'extérieur de chacun des flasques latéraux (4,5) du moyeu.

4. Roue arrière suivant l'une quelconque des revendications précédentes **caractérisée en ce que** chaque face frontale (3a,3b) du noyau central 3 présente des creux 11 répartis régulièrement autour de l'axe (x,y) du noyau central (3).

5. Roue arrière suivant la revendication 4 **caractérisée en ce que** chacun des flasques latéraux (4,5) présente, sur sa face respective (4b,5b) qui est tournée vers le noyau (3), des bossages ou tétons (12) répartis régulièrement autour de l'axe (x,y) du noyau et disposés en regard des creux (11), vu dans le sens axial.

6. Roue arrière selon l'une quelconque des revendications précédentes **caractérisée en ce que** le nombre d'éléments d'emboîtement (12) du flasque (5) comportant la couronne de transmission (7) est égal au nombre d'éléments complémentaires (11) du noyau (3) alors que le nombre d'éléments d'emboîtement (12) du flasque (4) portant le disque de frein (6) est inférieur au nombre d'éléments (11) du moyeu (3).

## Patentansprüche

1. Hinterrad eines Zweirad-Fahrzeugs, das eine Nabe enthält, die ihrerseits aus einem Kern (3), einem Zahnkranz (7) zur Übermittlung der Drehbewegung und einer Bremsscheibe (6) besteht, wobei diese drei Teile aufeinander aufliegen und durch entsprechende Mittel verdrehfest miteinander verbunden sind, und wobei diese drei Teile (3, 6, 7) mit Mitteln versehen sind, um sie in den beiden möglichen um 180° gekippten Einbaupositionen so einbauen zu können, dass sich der Zahnkranz (7) auf der Seite der Antriebskette und sich die Bremsscheibe (6) auf der Seite der Scheibenbremse befindet, **dadurch gekennzeichnet, dass** diese dreiteilige Anordnung einfach mittels der Radmutter ausbaubar ist.

2. Hinterrad gemäß Anspruch 1, **dadurch gekennzeichnet, dass** der zur mittleren Querschnittebene (P) symmetrische zentrale Kern (3) auf jeder seiner Stirnflächen (3a, 3b) eine gleiche Anzahl und um die Achse (x, y) der Nabe gleichmäßig verteilte hervorstehende oder vertiefte Rastelemente (11) enthält, sowie zwei Flansche (4, 5), die auf den Stirnflächen (3a, 3b) des Kems (3) aufliegen und von denen der eine die Bremsscheide (6) und der andere den Antriebs-Zahnkranz (7) trägt, wobei jeder dieser Flansche (4, 5) auf seiner der jeweiligen Stirnfläche (3a, 3b) des Kerns (3) zugewandten Seite (4b, 5b) vertiefte oder hervorstehende ergänzende Rastelemente (12) enthält, die mit den Rastelementen (11) des Kerns (3) so zusammenwirken, dass die Flansche (4, 5) verdrehfest auf diesem Kem aufliegen.

3. Hinterrad gemäß Anspruch 2, **dadurch gekennzeichnet, dass** außen an den seitlichen Flanschen (4, 5) der Nabe eine Distanzhülse (13) angebracht ist, deren Breite vom Fahrzeugtyp abhängt.

4. Hinterrad gemäß einem beliebigen der vorstehenden Ansprüche, **dadurch gekennzeichnet, dass** jede der Stirnflächen (3a, 3b) des zentralen Kerns (3) mit gleichmäßig um die Achse (x, y) des zentralen Kerns (3) verteilten Vertiefungen (11) versehen ist.

5. Hinterrad gemäß Anspruch 4, **dadurch gekennzeichnet, dass** jeder der seitlichen Flansche (4, 5) auf seiner dem Kern (3) zugewandten Seite (4b, 5b) mit gleichmäßig um die Achse (x, y) des zentralen Kerns (3) verteilten Vorsprüngen oder Stiften (12) versehen ist, welche, in axialer Richtung gesehen, den Vertiefungen (11) gegenüberliegen.

6. Hinterrad gemäß einem beliebigen der vorstehenden Ansprüche, **dadurch gekennzeichnet, dass** die Anzahl der Rastelemente (12) des Flansches (5), der den Zahnkranz (7) trägt, gleich groß ist wie die Anzahl ergänzender Rastelemente (11) des Kerns (3), während die Anzahl der Rastelemente (12) des Flansches (4), der die Bremsscheibe (6) trägt, geringer ist als die Anzahl ergänzender Rastelemente (11) des Kerns (3).

## Claims

1. Rear wheel of a two-wheel locomotion machine, comprising a hub constituted by a boss (3), a ring gear (7) for transmission of the movement of rotation and a brake disc (6), the three parts joined to one another by means rendering them fast in rotation, the assembly of the three parts (3, 6,7) comprising means allowing it, in one and the other of its two positions of possible assembly opposite by 180° with respect to one another, to present a ring gear (7) on the side where the transmission chain is located and a brake disc (6) on the side where the disc brake is located, **characterized in that** the three-part assembly is easily dismountable by the wheel nut.

2. Rear wheel according to Claim 1, **characterized in that** the central boss (3), symmetrical with respect to a median transverse plane (P), comprises on each of its two frontal faces (3a, 3b), the same number of male or female fitting elements (11) distributed in the same manner about the axis (x,y) of the hub, and two plates (4, 5) connected respectively on the two frontal faces (3a, 3b) of the boss (3), one bearing the brake disc (6) and the other the transmission ring gear (7), each of these plates (4, 5) comprising, on its face (4b), 5b) turned toward the associated frontal face (3a, 3b) of the boss (3), complementary female or male elements (12) cooperating with the fitting elements (11) of the boss (3) in order to render fast in rotation the boss surrounded by the two plates (4, 5).

3. Wheel according to Claim 2, **characterized in that** a distance piece (13) whose width varies as a function of the type of machine, is mounted outside each of the lateral plates (4, 5) of the hub.

4. Rear wheel according to any one of the preceding Claims, **characterized in that** each frontal face (3a, 3b) of the central boss 3 presents hollows 11 distributed regularly about the axis (x,y) of the central boss (3).

5. Rear wheel according to Claim 4, **characterized in that** each of the lateral plates (4, 5) presents, on its respective face (4b, 5b) which is turned towards the boss (3), protuberances or studs (12) distributed regularly about the axis (x,y) of the boss and disposed opposite the hollows (11) viewed in the axial direction.

6. Rear wheel according to any one of the preceding Claims, **characterized in that** the number of fitting elements (12) of the plate (5) comprising the transmission ring gear (7) is equal to the number of complementary elements (11) of the boss (3), while the number of fitting elements (12) of the plate (4) bearing the brake disc (6) is less than the number of elements (11) of the hub (3).
